# EUROPEAN PATENT SPECIFICATION

(11) **EP 2 915 709 B1**
(45) Date of publication and mention of the grant of the patent: **14.11.2018**
(21) Application number: 13851523.4
(22) Date of filing: 09.09.2013
(51) Int. Cl.: B60T 8/17

(54) **REFERENCE VEHICLE BODY SPEED SWITCHING DETECTION METHOD IN ONE-CHANNEL ABS SYSTEM FOR MOTORCYCLE**
VERFAHREN ZUR UMSCHALTUNG EINER FAHRZEUGREFERENZGESCHWINDIGKEIT IN EINEM EINKANALIGEN ABS-SYSTEM EINES MOTORRADES
PROCÉDÉ DE COMMUTATION DE LA VITESSE DE RÉFÉRENCE D'UN VÉHICULE DANS UN SYSTÈME ABS À UN SEUL CANAL POUR MOTOCYCLE

(30) Priority: 30.10.2012 JP 2012238947
(43) Date of publication of application: 09.09.2015
(73) Proprietor: Bosch Corporation, Tokyo 150-8360 (JP)
(72) Inventor: SUZUKI, Koji, Yokohama-shi Kanagawa 224-8501 (JP); IGARI, Yoshihide, Yokohama-shi Kanagawa 224-8501 (JP)
(74) Representative: Hetterscheidt, Stephan
(86) International application number: PCT/JP2013/074232
(87) International publication number: WO 2014/069102

(56) References cited:
- EP-A1- 0 476 582
- EP-A1- 1 323 604
- WO-A1-2012/004029
- DE-A1-102010 030 984
- JP-A- S5 784 277
- JP-A- 2007 269 290

## Description

### Technical Field

The present invention relates to a motorcycle that performs ABS control reference vehicle body speed switching detection in a one-channel ABS system of a motorcycle that executes ABS control for at least one of front and rear wheels on the basis of the two wheel speeds of the front and rear wheels, and a method therefor.

### Background Art

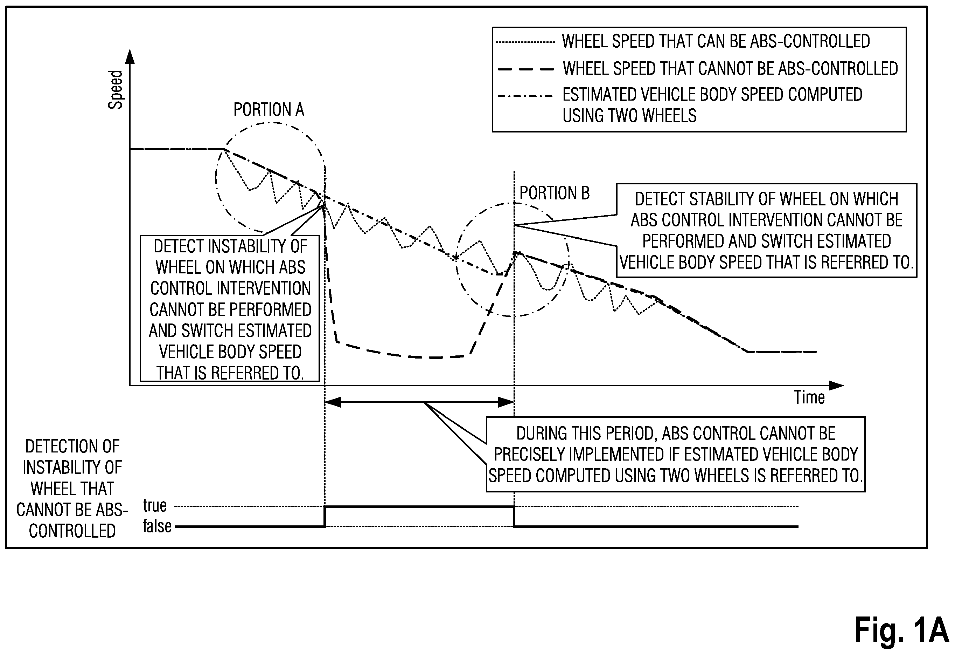

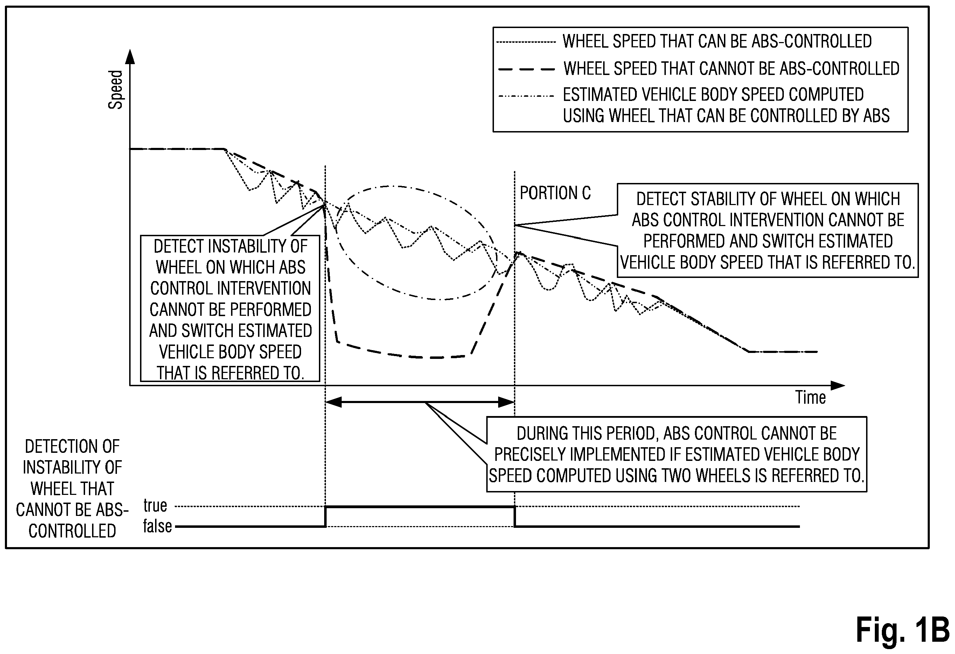

In one-channel ABS systems of motorcycles that ABS-control at least one of front and rear wheels on the basis of the two wheel speeds of the front and rear wheels, sometimes the non-ABS-controlled wheel that is not ABS-controlled tends to lock up during braking. FIG. 1 is a drawing for describing ABS control in a conventional one-channel ABS system. FIG. 1(a) shows a change in speed in a case where ABS control has been performed constantly on the basis of the two wheel speeds of the front and rear wheels, and FIG. 1(b) is a drawing showing a change in speed in a case where ABS control has been performed on the basis of the wheel speed of the ABS-controlled wheel that is ABS-controlled.

As shown in FIG. 1(a), the wheel speed of the non-ABS-controlled wheel tending to lock up deviates from the actual vehicle body speed, so the wheel speed of the non-ABS-controlled wheel cannot be used in the computation of ABS control as the vehicle body speed. For example, as shown in portion B of FIG. 1(a), in a case where the non-ABS-controlled wheel is tending to lock up, the vehicle body speed that is computed based on the two wheel speeds of the front and rear wheels is computed much smaller than the actual vehicle body speed. Consequently, if ABS control is performed using as a reference this computed vehicle body speed, there is the concern that the control of the ABS-controlled wheel will not be able to be appropriately performed. Furthermore, this can become a factor causing instability in the driving of the motorcycle.

On the other hand, the wheel speed of the ABS-controlled wheel that is ABS-controlled seesaws during braking as shown in FIG. 1(b), so if the computation of ABS control is performed using as a reference a vehicle body speed constantly based on the one ABS-controlled wheel, as shown in FIG. 1(b), ABS control becomes unstable, which is not preferred.

EP 1 323 604 A1 discloses a method for determining a reference speed in an anti-lock braking control of a vehicle having two or more wheels. The method comprises the method steps of supposing a wheel speed of a wheel rotating at a slowest rotational speed, supposing a wheel speed of a wheel rotating at a fastest rotational speed, supposing a default, and determining said reference speed based on a wheel speed calculated using the slowest rotational speed, the fastest rotational speed and the default.

DE 10 2010 030 984 A1 describes a similar method for determining a reference speed.

Moreover, EP 0 476 582 A1 describes an estimated vehicle speed detection apparatus for motorcycles that calculates an estimated vehicle speed based on a front wheel speed and a rear wheel speed and applies antilock brake control to each of said wheels.

### Summary of Invention

### Technical Problem

The present invention has been made in order to solve the issue described above, and it is an object thereof to provide a motorcycle that can realize ABS control based on a vehicle body speed suited to the computation of ABS control during braking.

Furthermore, it is an object of the present invention to provide a motorcycle which, in a case where the non-ABS-controlled wheel is tending to lock up, can realize ABS control using as a reference a vehicle body speed based on the wheel speed of the ABS-controlled wheel that is not tending to lock up.

### Solution to Problem

In order to solve the above-described problem, the present invention provides a one-channel ABS control method of a motorcycle with the features of claim 1 and a one-channel ABS control method of a motorcycle with the features of claim 7.

Here, by characterizing the method so that, when the slip ratio is not equal to or greater than the vehicle body speed switching detection threshold value of the wheel slip ratio (step 114: N) and the slip ratio is equal to or greater than a large wheel slip determination threshold value (step 130: Y), the method executes ABS control using as a reference the single wheel vehicle body speed (step 120), the method can determine the slip ratio again to ensure stability, judge that the slip ratio that has been set is an erroneous setting, and perform ABS control on the basis of the controlled wheel speed.

Furthermore, by characterizing the method so that, when the slip ratio is not equal to or greater than the large wheel slip determination threshold value (step 130: N), the method does not execute ABS control using as a reference the single wheel vehicle body speed, unnecessary execution of ABS control with respect to the non-controlled wheel that has been judged stable by the series of judgments described above can be saved.

Moreover, by characterizing the method so that, in a case where the non-controlled wheel acceleration/deceleration is not equal to or less than the vehicle body speed switching detection threshold value of the wheel deceleration (step 116: N) or in a case where the non-controlled wheel acceleration/deceleration is not in the deceleration direction (step 118: N), when the non-controlled wheel speed is equal to or less than a vehicle body speed switching detection threshold value of the wheel speed (step 134: Y), the method executes ABS control using as a reference the single wheel vehicle body speed (step 120), when the non-controlled wheel does not rotate, the effect of the non-controlled wheel tending to lock up can be eliminated and ABS control can be performed on the basis of the controlled wheel speed.

Moreover, by characterizing the method so that, in a case where the non-controlled wheel speed is not equal to or less than the vehicle body speed switching detection threshold value of the wheel speed (step 134: N), when the slip ratio is equal to or greater than the large wheel slip determination threshold value (step 130: Y), the method executes ABS control using as a reference the single wheel vehicle body speed (step 120), even in a case where a judgment cannot be made using the non-controlled wheel acceleration/deceleration and the non-controlled wheel speed, whether or not ABS control is necessary can be judged using the slip ratio and ABS control can be performed on the basis of the controlled wheel speed.

Moreover, by characterizing the method so that, when the slip ratio is not equal to or greater than the large wheel slip determination threshold value (step 130: N), the method does not execute ABS control using as a reference the single wheel vehicle body speed, unnecessary execution of ABS control with respect to the non-controlled wheel that has been judged stable by the series of judgments described above can be saved.

### Advantageous Effects of Invention

By employing the configuration of the present invention, ABS control can be realized using as a reference a vehicle body speed suited to the computation of ABS control. Brief Description of Drawings

[FIG. 1] FIG 1 is a drawing describing ABS control in a conventional one-channel ABS system.
[FIG. 2] FIG. 2 is a drawing showing the configuration of a motorcycle pertaining to the present embodiment.
[FIG. 3] FIG. 3 is a flowchart describing a method of detecting the tendency of a rear wheel to lock up in a reference vehicle body speed switching program of a one-channel ABS system pertaining to the present embodiment.
[FIG. 4] FIG. 4 is a drawing showing a vehicle body speed switching detection threshold value of a wheel slip ratio dependent on vehicle body acceleration/deceleration.
[FIG. 5] FIG. 5 is a drawing showing a vehicle body speed switching detection threshold value of a wheel slip ratio dependent on rear wheel acceleration/deceleration.
[FIG. 6] FIG. 6 is a flowchart for describing a method of detecting that the tendency of the rear wheel to lock up has been eliminated in the reference vehicle body speed switching program of the one-channel ABS system pertaining to the present embodiment.
[FIG. 7] FIG. 7 is a drawing describing ABS control in the one-channel ABS system pertaining to the present embodiment.

### Description of Embodiments

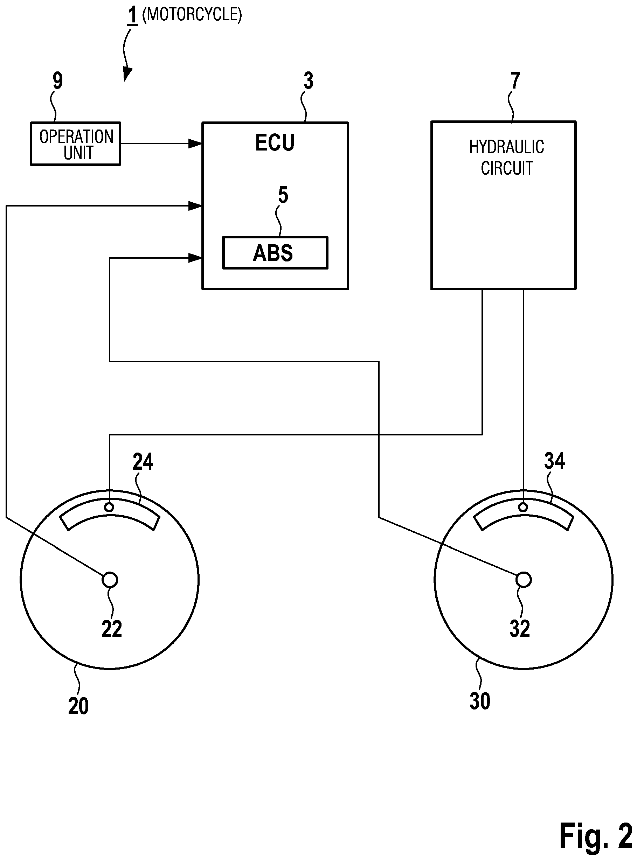

An embodiment of the present invention will be described below using the drawings. FIG. 2 is a drawing showing the configuration of a motorcycle 1 pertaining to the present embodiment. The motorcycle 1 is configured to include a front wheel 20, which serves as an example of an ABS-controlled wheel that is ABS-controlled, and a rear wheel 30, which serves as an example of a non-ABS-controlled wheel that is not ABS-controlled. Additionally, the front and rear wheels 20 and 30 are equipped with wheel speed sensors 22 and 32 and brakes 24 and 34. Furthermore, the motorcycle 1 is equipped with an ECU 3 and an operation unit 9 that is connected to the ECU 3. The ECU 3 is connected to the wheel speed sensors 22 and 32 and is also connected to the brakes 24 and 34 via a hydraulic circuit 7. Furthermore, the ECU 3 has an ABS control unit 5 inside.

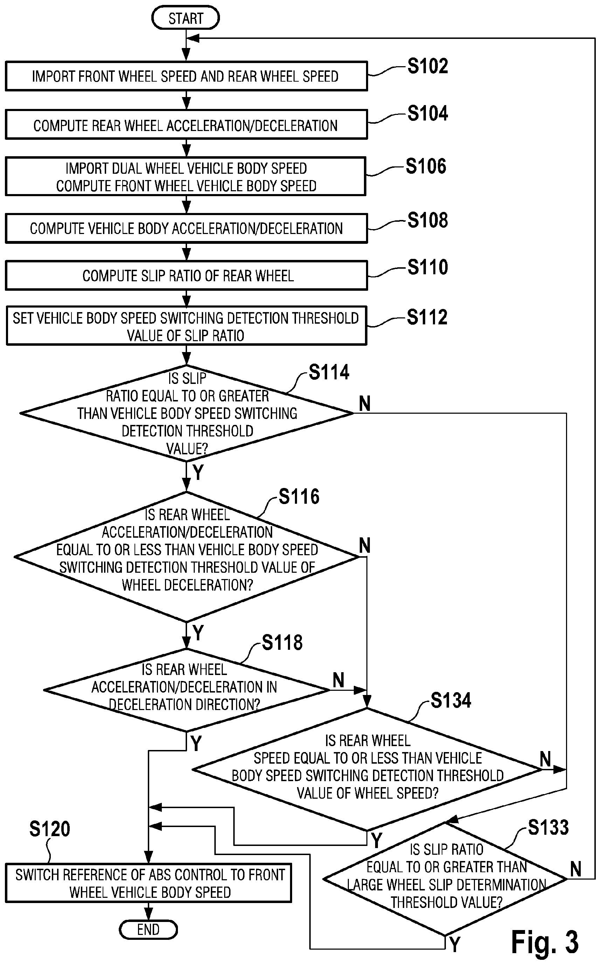

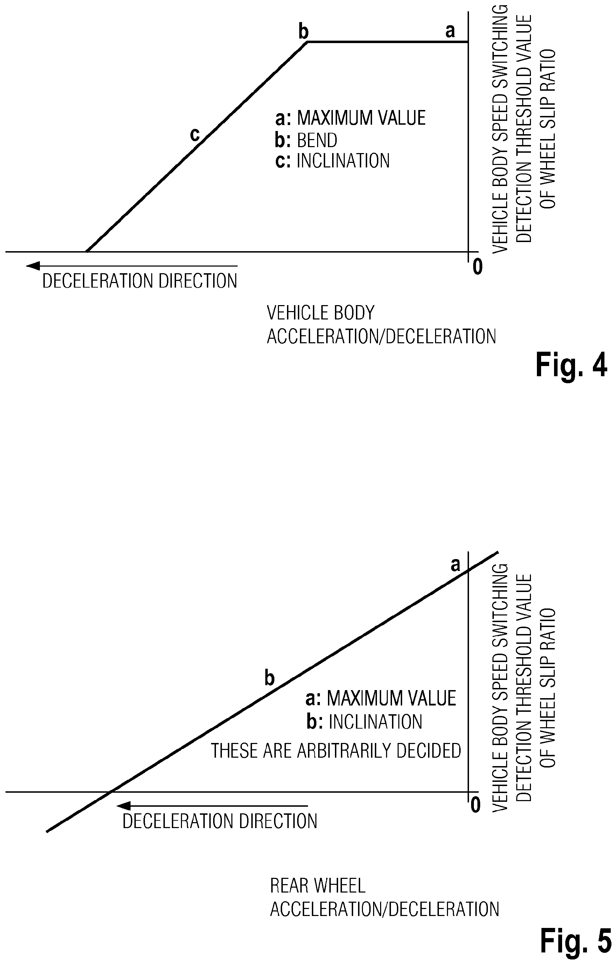

A one-channel ABS control method that is executed in the motorcycle 1 having this configuration will be described below. FIG. 3 is a flowchart describing a method of detecting that the rear wheel 30 is tending to lock up in a reference vehicle body speed switching program of the one-channel ABS system pertaining to the present embodiment. Furthermore, FIG. 4 and FIG. 5 are drawings showing vehicle body speed switching detection threshold values sl_Thres_aVeh and sl_Thres_aW of the wheel slip ratio dependent on vehicle body acceleration/deceleration aVeh and rear wheel acceleration/deceleration aW_2.

Inside the motorcycle 1, the ECU 3 computes a front wheel speed vV_1 on the basis of the output of the front wheel speed sensor 22 and computes a rear wheel speed vV_2 on the basis of the output of the rear wheel speed sensor 32. Then, on the basis of the front wheel speed vV_1 and the rear wheel speed vV_2 that have been computed, the ECU 3 computes a dual wheel vehicle body speed vVeh_2WSS of the motorcycle 1. Specifically, for example, whichever of the front wheel speed vV_1 and the rear wheel speed vV_2 is the smaller value is used as the dual wheel vehicle body speed vVeh_2WSS.

The ABS control unit 5 imports the computed front wheel speed vV_1 and rear wheel speed vV_2 (step 102). Then, the ABS control unit 5 computes rear wheel acceleration/deceleration aW_2 of the rear wheel 30 on the basis of the rear wheel speed vV_2 (step 104). Furthermore, the ABS control unit 5 imports the computed dual wheel vehicle body speed vVeh_2WSS (step 106). Then, the ABS control unit 5 computes a front wheel vehicle body speed vVeh_1WSS serving as an example of a single wheel vehicle body speed on the basis of the front wheel speed vV_1 (step 106). Furthermore, the ABS control unit 5 computes vehicle body acceleration/deceleration aVeh of the motorcycle 1 on the basis of the dual wheel vehicle body speed vVeh_2WSS (step 108) .

Next, the ABS control unit 5 judges, by way of the following steps, whether or not the rear wheel 30 is tending to lock up. The ABS control unit 5 computes a slip ratio sl_2 of the rear wheel 30 on the basis of the dual wheel vehicle body speed vVeh_2WSS and the rear wheel speed vV_2 (step 110) . Next, the ABS control unit 5 sets, in accordance with the relationships shown in FIG. 4 and FIG. 5, a vehicle body speed switching detection threshold value sl_Thres of the wheel slip ratio from vehicle body speed switching detection threshold value sl_Thres_aVeh and sl_Thres_aW of the wheel slip ratio dependent on the vehicle body acceleration/deceleration aVeh and the rear wheel acceleration/deceleration aW_2 (step 112). The vehicle body speed switching detection threshold value sl_Thres of the wheel slip ratio is a fluctuating value that is set by the sum of the component (sl_Thres_aVeh) that is determined by the vehicle body acceleration/deceleration and the component (sl_Thres_aW) that is determined by the wheel deceleration. Furthermore, a maximum value limit (a large wheel slip determination threshold value: Para3) and a minimum value limit (Para5) that are fixed values are set for that threshold value. Because of this, when the vehicle body acceleration/deceleration is large, the road surface friction coefficient µ can also be considered large, and the progression of the tendency for the wheels to lock up can be considered to become slower than when the road surface friction coefficient µ is small. Furthermore, when the wheel deceleration is large, the tendency of the wheels to lock up can be considered to progress faster. For this reason, as mentioned above, the vehicle body speed switching detection threshold value sl_Thres of the wheel slip ratio is set by the sum of sl_Thres_aVeh and sl_Thres_aW as described above.

In a case where the slip ratio sl_2 of the rear wheel 30 is equal to or greater than the vehicle body speed switching detection threshold value of the wheel slip ratio (step 114: Y) and the rear wheel acceleration/deceleration aW_2 is equal to or less than the vehicle body speed switching detection threshold value of the wheel deceleration (step 116: Y) and the rear wheel acceleration/deceleration aW_2 is in the deceleration direction (step 118: Y), the rear wheel 30 is tending to lock up, so the ABS control unit 5 switches the vehicle body speed serving as the reference of ABS control from the dual wheel vehicle body speed vVeh_2WSS to the front wheel vehicle body speed (single wheel vehicle body speed) vVeh_1WSS (step 120).

When in step 114 the slip ratio sl_2 of the rear wheel 30 is not equal to or greater than the vehicle body speed switching detection threshold value of the wheel slip ratio (step 114: N), if the slip ratio sl_2 of the rear wheel 30 is equal to or greater than the large wheel slip determination threshold value (Para3) (step 130: Y), the slip ratio sl_2 is larger than a predetermined value, so the ABS control unit 5 judges that the slip ratio sl_2 is excessively large and switches the vehicle body speed serving as the reference of ABS control from the dual wheel vehicle body speed vVeh_2WSS to the front wheel vehicle body speed (single wheel vehicle body speed) vVeh_1WSS (step 120). For example, an erroneous setting of the vehicle body speed switching detection threshold value of the wheel slip ratio in step 112 is conceivable.

On the other hand, when the slip ratio sl_2 of the rear wheel 30 is not equal to or greater than the large wheel slip ratio determination threshold value (step 130: N), the slip ratio sl_2 is not that large, so the ABS control unit 5 does not switch the vehicle body speed serving as the reference of ABS control.

When in step 116 the rear wheel acceleration/deceleration aW_2 is not equal to or less than the vehicle body speed switching detection threshold value of the wheel deceleration (step 116: N) or when in step 118 the rear wheel acceleration/deceleration aW_2 is not in the deceleration direction (step 118: N), if the rear wheel speed vV_2 is equal to or less than the vehicle body speed switching detection threshold value of the wheel speed (step 134: Y), the rear wheel 30 is tending to lock up, so the ABS control unit 5 switches the vehicle body speed serving as the reference of ABS control from the dual wheel vehicle body speed vVeh_2WSS to the front wheel vehicle body speed (single wheel vehicle body speed) vVeh_1WSS (step 120).

On the other hand, when in step 134 the rear wheel speed vV_2 is not equal to or less than the vehicle body speed switching detection threshold value of the wheel speed (step 134: N), if the slip ratio sl_2 of the rear wheel 30 is equal to or greater than the large wheel slip determination threshold value (step 130: Y), the ABS control unit 5 judges that the slip ratio sl_2 is excessively large and in an unstable state and switches the vehicle body speed serving as the reference of ABS control from the dual wheel vehicle body speed vVeh_2WSS to the front wheel vehicle body speed (single wheel vehicle body speed) vVeh_1WSS (step 120).

In contrast, when in step 130 the slip ratio sl_2 of the rear wheel 30 is not equal to or greater than the large wheel slip determination threshold value (step 130: N), the ABS control unit 5 does not switch the vehicle body speed serving as the reference of ABS control.

Through these steps, the motorcycle pertaining to the present embodiment detects that the rear wheel 30 is tending to lock up and switches the vehicle body speed serving as the reference of ABS control from the dual wheel vehicle body speed vVeh_2WSS to the front wheel vehicle body speed (single wheel vehicle body speed) vVeh_1WSS. Because of this, the motorcycle eliminates the effect of the rear wheel speed vV_2 of the rear wheel 30 tending to lock up and performs ABS control using as a reference a vehicle body speed based on the front wheel vehicle body speed (single wheel vehicle body speed) vVeh_1WSS of the front wheel 20 not tending to lock up, so stable ABS control can be realized during braking.

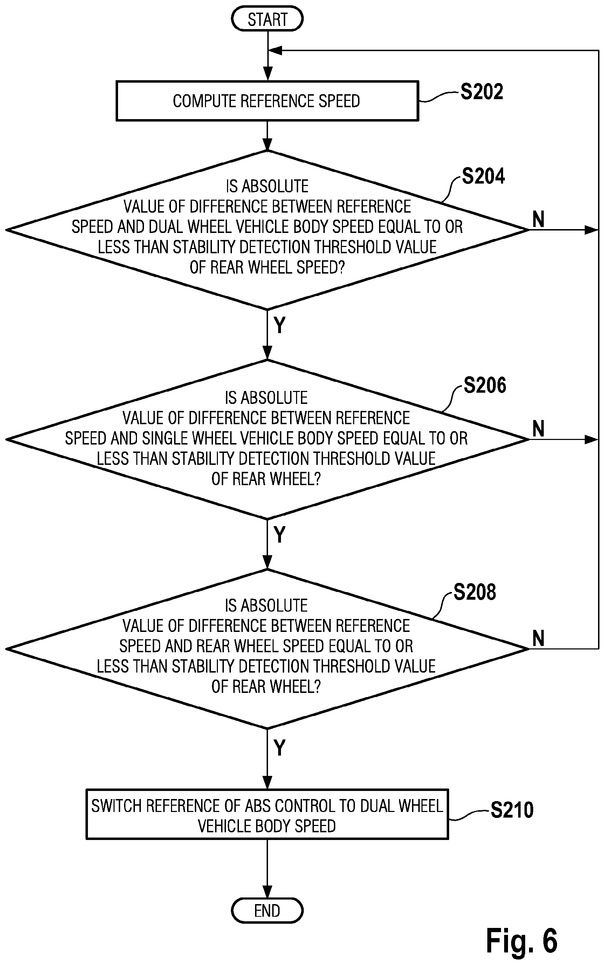

Next, a method of detecting the timing of when to return the vehicle body speed serving as the reference of the computation of ABS control from the front wheel vehicle body speed (single wheel vehicle body speed) vVeh_1WSS to the dual wheel vehicle body speed vVeh_2WSS will be described below. FIG. 6 is a flowchart for describing a method of detecting that the tendency of the rear wheel to lock up has been eliminated in the reference vehicle body speed switching program of the one-channel ABS system pertaining to the present embodiment. The program shown in FIG. 6 is executed in a case given that ABS control based on the front wheel vehicle body speed (single wheel vehicle body speed) vVeh_1WSS is being executed.

The ABS control unit 5 computes the average value of the dual wheel vehicle body speed vVeh_2WSS based on the front wheel speed vV_1 and the rear wheel speed vV_2, the single wheel vehicle body speed vVeh_1WSS based on the front wheel speed vV_1, and the rear wheel speed vV_2 and uses the average value as a reference speed vAve (step 202). Then, when the absolute value of the difference between the reference speed vAve and the dual wheel vehicle body speed vVeh_2WSS is equal to or less than a stability detection threshold value of the rear wheel speed vV_2 (step 204: Y) and the absolute value of the difference between the reference speed vAve and the single wheel vehicle body speed vVeh_1WSS is equal to or less than the stability detection threshold value of the rear wheel speed vV_2 (step 206: Y) and the absolute value of the difference between the reference speed vAve and the rear wheel speed vV_2 is equal to or less than the stability detection threshold value of the rear wheel speed vV_2 (step 208: Y), the ABS control unit 5 executes ABS control using as a reference the dual wheel vehicle body speed vVeh_2WSS (step 210). That is, when the dual wheel vehicle body speed vVeh_2WSS and the single wheel vehicle body speed vVeh_1WSS and the rear wheel speed vV_2 become close values, the slip ratio sl_2 of the rear wheel 30 is smaller than a predetermined value, so the ABS control unit 5 switches the vehicle body speed serving as the reference of ABS control from the single wheel vehicle body speed vVeh_1WSS to the dual wheel vehicle body speed vVeh_2WSS (step 210).

Through these steps, the motorcycle 1 pertaining to the present embodiment detects that the tendency of the rear wheel 30 to lock up has been eliminated and returns the vehicle body speed serving as the reference of the computation of ABS control from the single wheel vehicle body speed vVeh_1WSS to the dual wheel vehicle body speed vVeh_2WSS. Because of this, the motorcycle 1 eliminates the effect of speed fluctuations in the single wheel vehicle body speed vVeh_1WSS being ABS-controlled and performs ABS control using as a reference a vehicle body speed based on the dual wheel vehicle body speed vVeh_2WSS, so stable ABS control can be realized during braking.

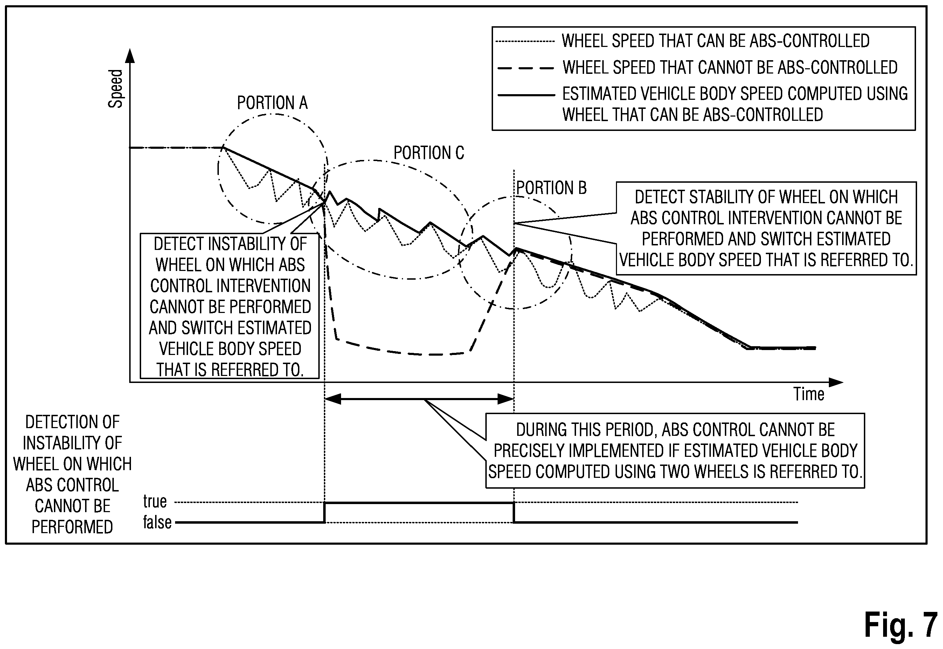

The effects resulting from the reference vehicle body speed switching program of the one-channel ABS system pertaining to the present embodiment will be described below using a time-speed change chart similar to FIG. 1. FIG. 7 is a drawing describing ABS control in the one-channel ABS system pertaining to the present embodiment.

As shown in portion A of FIG. 7, until the rear wheel tends to lock up, the motorcycle performs ABS control using as a reference the dual wheel vehicle body speed vVeh_2WSS. Then, when it has been detected that the rear wheel is tending to lock up, the motorcycle switches the reference vehicle body speed so as to perform ABS control using as a reference the single wheel vehicle body speed vVeh1_1WSS. As a result, as shown in portion C of FIG. 7, by switching the reference vehicle body speed of ABS control from the dual wheel vehicle body speed to the single wheel vehicle body speed, it becomes possible to use the single wheel vehicle body speed that is closer to the actual vehicle body speed from the dual wheel vehicle body speed that is computed smaller than the actual vehicle body speed, and as a result, more appropriate ABS control can be performed and factors causing instability can be alleviated. Thereafter, when the tendency of the rear wheel to lock up has been eliminated, as shown in portion B of FIG. 7, a sudden speed change does not arise and factors causing instability in the driving of the motorcycle are alleviated.

In the above-described embodiment, the example of the one-channel ABS system of the motorcycle 1 that ABS-controls at least one of the front and rear wheels 20 and 30 on the basis of the two wheel speeds of the front and rear wheels has been described, but the present invention is not limited to this and, for example, is also applicable to a case where ABS control is possible for both wheels but the operator issues an instruction via the operation unit 9 to stop the ABS control of one wheel (e.g., a case where the operator intentionally wants to stop ABS control in a race) or a case where the failure of a valve (not illustrated in the drawings) in the hydraulic circuit 7 has been detected and ABS control of the corresponding wheel is to be stopped.

Furthermore, in the above-described embodiment, as the method of detecting that the rear wheel is tending to lock up, an example using the vehicle body speed switching detection threshold values sl_Thres_aVeh and sl_Thres_aW of the wheel slip ratio dependent on the vehicle body acceleration/deceleration aVeh and the rear wheel acceleration/deceleration aW_2 shown in FIG. 4 and FIG. 5 has been described, but as the method of detecting slippage of the non-ABS-controlled wheel during braking, for example, like the method shown in FIG. 6, the motorcycle may be configured to use the average value of the dual wheel vehicle body speed, the single wheel vehicle body speed based on the wheel speed of the ABS-controlled wheel, and the wheel speed of the non-ABS-controlled wheel and detect that the slip ratio of the non-ABS-controlled wheel is smaller than a predetermined value.

In the above-described configuration, an example where the front wheel speed vV_1 and the rear wheel speed vV_2 are computed on the basis of the outputs of the wheel speed sensor 22 of the front wheel and the wheel speed sensor 32 of the rear wheel has been described, but the present invention is not limited to this and may also, for example, be given a configuration that uses an A/D converter (not illustrated in the drawings) to A/D convert the outputs of the wheel speed sensor of the front wheel and the wheel speed sensor of the rear wheel to digital values and outputs the digital values as the front wheel speed and the rear wheel speed.

### Reference Signs List

1: Motorcycle, 3: ECU, 5: ABS Control Unit, 7: Hydraulic Circuit, 9: Operation Unit, 20: Front Wheel (ABS-controlled Wheel), 22: Wheel Speed Sensor of Front Wheel, 24: Brake, 30: Rear Wheel (Non-ABS-controlled Wheel), 32: Wheel Speed Sensor of Rear Wheel, 34: Brake
vV_1: Front Wheel Speed, vV_2: Rear Wheel Speed, vVeh_2WSS: Dual Wheel Vehicle Body Speed, vVeh1_1WSS: Front Wheel Vehicle Body Speed (Single Wheel Vehicle Body Speed), aVeh: Vehicle Body Acceleration/Deceleration, aW_2: Rear Wheel Acceleration/Deceleration, sl_Thres_aVeh, sl_Thres_aW: Vehicle Body Speed Switching Detection Threshold Values of Wheel Slip Ratios, sl_2: Slip Ratio, vVeh_1WSS: Single Wheel Vehicle Body Speed, vAve: Reference Speed

## Claims

1. A one-channel ABS control method of a motorcycle (1) that is equipped with wheel speed sensors (22, 32) in front and rear wheels (20, 30) and executes ABS control on either one of the front and rear wheels (20, 30) on the basis of outputs of the two wheel speed sensors (22, 32) during braking, the method being **characterized by** comprising:
a step of computing the non-controlled wheel acceleration/deceleration of the wheel (20, 30) that is not ABS-controlled (step 104);
a step of computing the vehicle body acceleration/deceleration of the motorcycle (1) (step 108);
a step of computing the slip ratio of the wheel (20, 30) that is not ABS-controlled (step 110);
a step of setting a vehicle body speed switching detection threshold value of the wheel slip ratio dependent on the behavior of the wheels (20, 30) and the vehicle body (step 112); and
a step of executing ABS control using as a reference a single wheel vehicle body speed (step 120) in a case where the slip ratio is equal to or greater than the vehicle body speed switching detection threshold value of the wheel slip ratio (step 114: Y) and the non-controlled wheel acceleration/deceleration is equal to or less than a vehicle body speed switching detection threshold value of wheel deceleration (step 116: Y) and the non-controlled wheel acceleration/deceleration is in the deceleration direction (step 118: Y).

2. The method according to claim 1, wherein when the slip ratio is not equal to or greater than the vehicle body speed switching detection threshold value of the wheel slip ratio (step 114: N) and the slip ratio is equal to or greater than a large wheel slip determination threshold value (step 130: Y), the method executes ABS control using as a reference the single wheel vehicle body speed (step 120).

3. The method according to claim 2, wherein when the slip ratio is not equal to or greater than the large wheel slip determination threshold value (step 130: N), the method does not execute ABS control using as a reference the single wheel vehicle body speed.

4. The method according to claim 1, wherein in a case where the non-controlled wheel acceleration/deceleration is not equal to or less than the vehicle body speed switching detection threshold value of the wheel deceleration (step 116: N) or in a case where the non-controlled wheel acceleration/deceleration is not in the deceleration direction (step 118: N), when the non-controlled wheel speed is equal to or less than a vehicle body speed switching detection threshold value of the wheel speed (step 134: Y), the method executes ABS control using as a reference the single wheel vehicle body speed (step 120).

5. The method according to claim 4, wherein in a case where the non-controlled wheel speed is not equal to or less than the vehicle body speed switching detection threshold value of the wheel speed (step 134: N), when the slip ratio is equal to or greater than the large wheel slip determination threshold value (step 130: Y), the method executes ABS control using as a reference the single wheel vehicle body speed (step 120).

6. The method according to claim 5, wherein when the slip ratio is not equal to or greater than the large wheel slip determination threshold value (step 130: N), the method does not execute ABS control using as a reference the single wheel vehicle body speed.

7. A one-channel ABS control method of a motorcycle (1) that is equipped with wheel speed sensors (22, 32) in front and rear wheels (20, 30) and executes ABS control on either one of the front and rear wheels (20, 30) on the basis of outputs of the two wheel speed sensors (22, 32) during braking, the method being **characterized by** comprising:
a step of calculating the average value of a dual wheel vehicle body speed based on the controlled wheel speed of the wheel (20, 30) that is ABS-controlled and the non-controlled wheel speed of the wheel (20, 30) that is not ABS-controlled, a single wheel vehicle body speed based on the controlled wheel speed, and the non-controlled wheel speed to thereby compute a reference speed (step 202); and
a step of executing ABS control using as a reference the dual wheel vehicle body speed (step 210) when the absolute value of the difference between the reference speed and the dual wheel vehicle body speed is equal to or less than a stability detection threshold value of the non-controlled wheel speed (step 204: Y) and the absolute value of the difference between the reference speed and the single wheel vehicle body speed is equal to or less than the stability detection threshold value (step 206: Y) and the absolute value of the difference between the reference speed and the non-controlled wheel speed is equal to or less than the stability detection threshold value (step 208: Y).

## Patentansprüche

1. Einkanaliges ABS-Steuerverfahren eines Motorrads (1), das mit Radgeschwindigkeitssensoren (22, 32) in einem Vorder- und einem Hinterrad (20, 30) ausgerüstet ist und entweder am Vorder- oder am Hinterrad (20, 30) auf Basis der Ausgaben der zwei Radgeschwindigkeitssensoren (22, 32) während einer Bremsung eine ABS-Steuerung durchführt, wobei das Verfahren **dadurch gekennzeichnet ist, dass** es Folgendes umfasst:
einen Schritt des Berechnens der ungesteuerten Radbeschleunigung/-verzögerung des Rades (20, 30), das nicht ABS-gesteuert ist (Schritt 104);
einen Schritt des Berechnens der Fahrzeugkörperbeschleunigung/-verzögerung des Motorrads (1) (Schritt 108);
einen Schritt des Berechnens des Schlupfverhältnisses des Rades (20, 30), das nicht ABS-gesteuert ist (Schritt 110);
einen Schritt des Einstellens eines Fahrzeugkörpergeschwindigkeitsumschaltungsdetektio nsschwellwerts des Radschlupfverhältnisses in Abhängigkeit vom Verhalten der Räder (20, 30) und des Fahrzeugkörpers (Schritt 112) und
einen Schritt des Durchführens einer ABS-Steuerung unter Verwendung einer Einzelradfahrzeugkörpergeschwindigkeit als Referenz (Schritt 120) in einem Fall, in dem das Schlupfverhältnis mit dem Fahrzeugkörpergeschwindigkeitsumschaltungsdetektio nsschwellwert des Radschlupfverhältnisses identisch oder größer als dieser ist (Schritt 114: Y) und die ungesteuerte Radbeschleunigung/- verzögerung mit einem Fahrzeugkörpergeschwindigkeitsumschaltungsdetektio nsschwellwert einer Radverzögerung identisch oder kleiner als dieser ist (Schritt 116: Y) und die ungesteuerte Radbeschleunigung/-verzögerung in die Verzögerungsrichtung erfolgt (Schritt 118: Y).

2. Verfahren nach Anspruch 1, wobei, wenn das Schlupfverhältnis nicht mit dem Fahrzeugkörpergeschwindigkeitsumschaltungsdetektio nsschwellwert des Radschlupfverhältnisses identisch oder größer als dieser ist (Schritt 114: N) und das Schlupfverhältnis mit einem großen Radschlupfbestimmungsschwellwert identisch oder größer als dieser ist (Schritt 130: Y), das Verfahren eine ABS-Steuerung unter Verwendung der Einzelradfahrzeugkörpergeschwindigkeit als Referenz durchführt (Schritt 120).

3. Verfahren nach Anspruch 2, wobei, wenn das Schlupfverhältnis nicht mit dem großen Radschlupfbestimmungsschwellwert identisch oder größer ist als dieser (Schritt 130: N), das Verfahren keine ABS-Steuerung unter Verwendung der Einzelradfahrzeugkörpergeschwindigkeit als Referenz durchführt.

4. Verfahren nach Anspruch 1, wobei in einem Fall, in dem die ungesteuerte Radbeschleunigung/- verzögerung nicht mit dem Fahrzeugkörpergeschwindigkeitsumschaltungsdetektio nsschwellwert der Radverzögerung identisch oder kleiner ist als dieser (Schritt 116: N), oder in einem Fall, in dem die ungesteuerte Radbeschleunigung/-verzögerung nicht in die Verzögerungsrichtung erfolgt (Schritt 118: N), wenn die ungesteuerte Radgeschwindigkeit mit dem Fahrzeugkörpergeschwindigkeitsumschaltungsdetektio nsschwellwert identisch oder kleiner ist als dieser (Schritt 134: Y), das Verfahren eine ABS-Steuerung unter Verwendung der Einzelradfahrzeugkörpergeschwindigkeit als Referenz durchführt (Schritt 120).

5. Verfahren nach Anspruch 4, wobei in einem Fall, in dem die ungesteuerte Radgeschwindigkeit nicht mit dem Fahrzeugkörpergeschwindigkeitsumschaltungsdetektio nsschwellwert der Radgeschwindigkeit identisch oder kleiner ist als dieser (Schritt 134: N), wenn das Schlupfverhältnis mit dem großen Radschlupfbestimmungsschwellwert identisch oder größer ist als dieser (Schritt 130: Y), das Verfahren eine ABS-Steuerung unter Verwendung der Einzelradfahrzeugkörpergeschwindigkeit als Referenz durchführt (Schritt 120).

6. Verfahren nach Anspruch 5, wobei, wenn das Schlupfverhältnis nicht mit dem großen Radschlupfbestimmungsschwellwert identisch oder größer als dieser ist (Schritt 130: N), das Verfahren keine ABS-Steuerung unter Verwendung der Einzelradfahrzeugkörpergeschwindigkeit als Referenz durchführt.

7. Einkanaliges ABS-Steuerverfahren eines Motorrads (1), das mit Raddrehzahlsensoren (22, 32) in einem Vorder- und einem Hinterrad (20, 30) ausgerüstet ist und entweder am Vorder- oder am Hinterrad (20, 30) auf Basis der Ausgaben der zwei Raddrehzahlsensoren (22, 32) während einer Bremsung eine ABS-Steuerung durchführt, wobei das Verfahren **dadurch gekennzeichnet ist, dass** es Folgendes umfasst:
einen Schritt des Berechnens des Durchschnittswerts einer Doppelradfahrzeugkörpergeschwindigkeit auf Basis der gesteuerten Radgeschwindigkeit des Rades (20, 30), das ABS-gesteuert ist, und der ungesteuerten Radgeschwindigkeit des Rades (20, 30), das nicht ABS-gesteuert ist, einer Einzelradfahrzeugkörpergeschwindigkeit auf Basis der gesteuerten Radgeschwindigkeit und der ungesteuerten Radgeschwindigkeit, um dadurch eine Referenzgeschwindigkeit zu berechnen (Schritt 202) und
einen Schritt des Durchführens einer ABS-Steuerung unter Verwendung der Doppelradfahrzeugkörpergeschwindigkeit als Referenz (Schritt 210), wenn der Absolutwert der Differenz zwischen der Referenzgeschwindigkeit und der Doppelradfahrzeugkörpergeschwindigkeit mit einem Stabilitätsdetektionsschwellwert der ungesteuerten Radgeschwindigkeit identisch oder kleiner als dieser ist (Schritt 204: Y) und der Absolutwert der Differenz zwischen der Referenzgeschwindigkeit und der Einzelradfahrzeugkörpergeschwindigkeit mit dem Stabilitätsdetektionsschwellwert identisch oder kleiner als dieser ist (Schritt 206: Y) und der Absolutwert der Differenz zwischen der Referenzgeschwindigkeit und der ungesteuerten Radgeschwindigkeit mit dem Stabilitätsdetektionsschwellwert identisch oder kleiner als dieser ist (Schritt 208; Y).

## Revendications

1. Procédé de commande ABS à un seul canal d'un motocycle (1) qui est équipé de capteurs de vitesse de roue (22, 32) dans les roues avant et arrière (20, 30) et exécute la commande ABS sur l'une ou l'autre des roues avant et arrière (20, 30) sur la base des informations provenant des deux capteurs de vitesse de roue (22, 32) pendant le freinage, le procédé étant **caractérisé en ce qu'**il comprend les étapes suivantes :
une étape de calcul de l'accélération/décélération non commandée de la roue (20, 30) qui n'est pas commandée par ABS (étape 104);
une étape de calcul de l'accélération/décélération de la carrosserie de véhicule du motocycle (1) (étape 108);
une étape de calcul du taux de patinage de la roue (20, 30) qui n'est pas commandée par ABS (étape 110);
une étape de réglage d'une valeur seuil de détection de commutation de vitesse de la carrosserie d'un véhicule en fonction du comportement des roues (20, 30) et de la carrosserie du véhicule (étape 112); et
une étape consistant à exécuter une commande ABS en utilisant comme référence une vitesse de la carrosserie d'un véhicule à roue unique (étape 120) dans le cas où le taux de patinage est supérieur ou égal à la valeur seuil de détection de commutation de la vitesse de la carrosserie du véhicule (étape 114: Y) et l'accélération/décélération non commandée de la roue est inférieure ou égale à une valeur seuil de détection de la décélération de la roue (étape 116: Y) et l'accélération/décélération non commandée de la roue est dans le sens de la décélération (étape 118: Y).

2. Procédé selon la revendication 1, dans lequel, lorsque le taux de patinage n'est pas supérieur ou égal à la valeur seuil de détection de commutation de la vitesse de la carrosserie du véhicule, le taux de patinage des roues (étape 114: N) et le taux de patinage est supérieur ou égal à une valeur seuil de détermination du patinage des grandes roues (étape 130: Y), le procédé exécute la commande ABS en utilisant comme référence la vitesse de la carrosserie du véhicule à roue unique (étape 120).

3. Procédé selon la revendication 2, dans lequel, lorsque le taux de patinage n'est pas supérieur ou égal à la valeur seuil de détermination du patinage des grandes roues (étape 130: N), le procédé n'exécute pas la commande ABS en utilisant comme référence la vitesse de la carrosserie d'un véhicule à roue unique.

4. Procédé selon la revendication 1, dans lequel, dans le cas où l'accélération/décélération non commandée de la roue n'est pas inférieure ou égale à la valeur seuil de détection de commutation de la vitesse de la carrosserie du véhicule de la décélération de la roue (étape 116: N) ou dans le cas où l'accélération/décélération non commandée de la roue n'est pas dans le sens de la décélération (étape 118: N), lorsque la vitesse de roue non commandée est inférieure ou égale à une valeur seuil de détection de commutation de la vitesse de la carrosserie du véhicule (étape 134: Y), le procédé exécute la commande ABS en utilisant comme référence la vitesse de la carrosserie du véhicule à roue unique (étape 120).

5. Procédé selon la revendication 4, dans lequel, dans un cas où la vitesse de roue non commandée n'est pas inférieure ou égale à la valeur seuil de détection de commutation de la vitesse de la carrosserie du véhicule de la vitesse de roue (étape 134: N), lorsque le taux de patinage est supérieur ou égal à la valeur seuil de détermination du patinage des grandes roues (étape 130: Y) le procédé exécute la commande ABS en utilisant comme référence la vitesse de la carrosserie d'un véhicule à roue unique (étape 120).

6. Procédé selon la revendication 5, dans lequel, lorsque le taux de patinage n'est supérieur ou égal à la valeur seuil de détermination du patinage des grandes roues (étape 130: N), le procédé n'exécute pas la commande ABS en utilisant comme référence la vitesse de la carrosserie d'un véhicule à roue unique.

7. Procédé de commande ABS à un seul canal d'un motocycle (1) qui est équipé de capteurs de vitesse de roue (22, 32) dans les roues avant et arrière (20, 30) et exécute la commande ABS sur l'une ou l'autre des roues avant et arrière (20, 30) sur la base des informations provenant des deux capteurs de vitesse de roue (22, 32) pendant le freinage, le procédé étant **caractérisé en ce qu'**il comprend les étapes suivantes :
une étape de calcul de la valeur moyenne de la vitesse de carrosserie d'un véhicule à deux roues sur la base de la vitesse de roue commandée de la roue (20, 30) qui est commandée par ABS et de la vitesse de roue non commandée de la roue (20, 30) qui n'est pas commandée par ABS, d'une vitesse de carrosserie de véhicule à roue unique sur la base de la vitesse de roue commandée et de la vitesse de roue non commandée pour calculer ainsi une vitesse de référence (étape 202); et
une étape consistant à exécuter une commande ABS en utilisant comme référence la vitesse de la carrosserie du véhicule à deux roues (étape 210) lorsque la valeur absolue de la différence entre la vitesse de référence et la vitesse de la carrosserie du véhicule à deux roues est inférieure ou égale à une valeur seuil de détection de stabilité de la vitesse de roue non commandée (étape 204: Y) et la valeur absolue de la différence entre la vitesse de référence et la vitesse de la carrosserie du véhicule à roue unique est inférieure ou égale à la valeur seuil de détection de stabilité (étape 206: Y) et la valeur absolue de la différence entre la vitesse de référence et la vitesse de roue non commandée est inférieure ou égale à la valeur seuil de détection de stabilité (étape 208: Y).
